# EUROPEAN PATENT APPLICATION

(11) **EP 2 637 388 A1**
(43) Date of publication of application: **11.09.2013**
(21) Application number: 11837819.9
(22) Date of filing: 22.09.2011
(51) Int. Cl.: H04M 1/00, G09G 5/00

(54) **MOBILE TELEPHONE DEVICE AND DISPLAY CONTROL METHOD THEREOF**

(30) Priority: 05.11.2010 JP 2010248795
(71) Applicant: NEC CASIO Mobile Communications, Ltd., Kawasaki-shi Kanagawa 211-8666 (JP)
(72) Inventor: FUKASAWA, Kazunori, Kawasaki-shi Kanagawa 211-8666 (JP); HIGASHIBEPPU, Satoshi, Kawasaki-shi Kanagawa 211-8666 (JP)
(74) Representative: Vossius & Partner
(86) International application number: PCT/JP2011/071622
(87) International publication number: WO 2012/060166

(57) **Abstract**

If proximity sensor 50 detects that a human body is in close proximity to proximity sensor 50, while software keys appear on display section 10, software keys are caused to disappear on display section 10.

## Description

### TECHNICAL FIELD

The present invention relates to a mobile telephone and its display control method.

### BACKGROUND ART

To date, mobile telephones have been becoming essential for our lives from the view point of information exchange and information collection. When mobile telephones were first introduced, most of them had only a telephone function. In recent years, however, they have functions including a mail transmission function and an Internet connection function like ordinary personal computers. Some mobile telephones have operation buttons called software keys that appear on a screen and that allow the user to touch so as to cause the telephones to perform operations as the software keys are touched.

However, the user may unintentionally touch such a software key of such a mobile telephone while he or she is talking on it. In this case, the mobile telephone will perform an operation that the user does not intend to perform.

Patent Literature 1 discloses a technology that uses a proximity sensor that detects whether or not the user is in close proximity to the proximity sensor and that does not process data entered from an input device if he or she is in close proximity to the proximity sensor so as to prevent an operation that the user does not intend to perform from being performed.

Patent Literature 2 discloses a technology used for a screen display device that has a sensor that detects whether or not the hand of the user is in close proximity to the sensor and that switches from a screen on which touch icons appear to the other screen if the sensor detects that the hand is in close proximity to the sensor.

### RELATED ART LITERATURE

### PATENT LITERATURE

Patent Literature 1: JP2010-507870, Publication (translation version)
Patent Literature 2: JP2009-216888, Publication

### SUMMARY OF THE INVENTION

### PROBLEM TO BE SOLVED BY THE INVENTION

However, technology that uses a proximity sensor that detects whether or not the user is in close proximity to the proximity sensor and that does not process data entered from an input device if he or she is in close proximity to the proximity sensor, disclosed in Patent Literature 1, cannot recognize that data entered from the input device have not been processed.

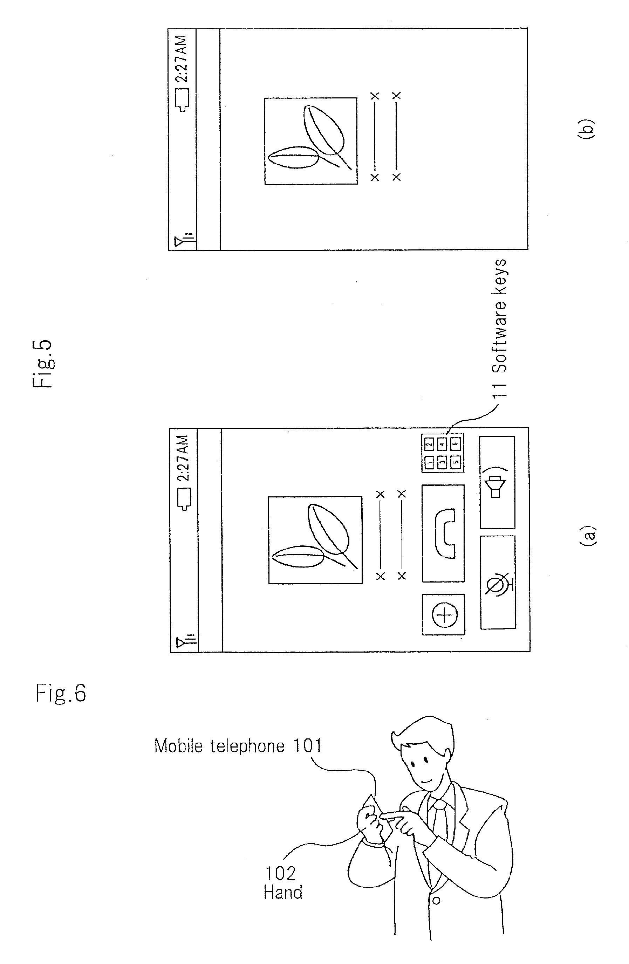

Fig. 6 is a schematic diagram showing the operation state of an ordinary mobile telephone.

As shown in Fig. 6, if the user operates mobile telephone 101 in such a manner that his or her hand 102 holds mobile telephone 101, the fingers of hand 102 may cover the proximity sensor. In this case, although mobile telephone 101 does not process data entered from the input device, the user cannot recognize this state. Thus, as a problem of this technology, the user may continue to enter data to the input device. In addition, mobile telephone 101 does not perform an operation corresponding to data that the user intentionally enters through the input device.

In the technology disclosed in Patent Literature 2, if the sensor detects that the hand of the user is in close proximity to the sensor, the mobile telephone switches from one screen that currently appears to the other screen. Thus, as a problem of this technology, if the sensor detects that the hand is in close proximity to the sensor, since the mobile telephone switches from the screen that currently appears to the other screen, the user may hesitate.

The present invention was made from the foregoing point of view. An object of the present invention is to provide a mobile telephone that has a display section on which information and operation means appear and that performs an operation as said operation means is touched such that if the user unintentionally touches the display, the mobile telephone is prevented from performing an operation that he or she does not intend to perform and also to provide its display control method.

### MEANS THAT SOLVE THE PROBLEM

To accomplish the foregoing object, the present invention is a mobile telephone that has a display section on which information and operation means appear and that performs an operation as said operation means is touched, including:
control means that causes said operation means to appear on said display section and controls an operation of said mobile telephone as said operation means is touched; and
a proximity sensor that detects whether or not a human body is in close proximity to said proximity sensor,
wherein if said proximity sensor detects that said human body is in close proximity to said proximity sensor while said operation means appears on said display section, said control means causes said operation means to disappear on said display section.

In addition, the present invention is a display control method of a mobile telephone that has a display section on which information and operation means appear and that performs an operation as said operation means is touched, including:
causing said operation means to disappear on said display section if a human body is in close proximity to a predetermined region of said display section while said operation means appears on said display section.

### EFFECT OF THE INVENTION

According to the present invention, if the human body is in close proximity to the proximity sensor, the operation means is caused to disappear on the display section. Thus, if the user intentionally touches the display section, the mobile telephone is prevented from performing an operation that the user does not intend to perform. In addition, the user can recognize that the operation means that appears on the display does not accept data entered through the operation means.

### BRIEF DESCRIPTION OF DRAWINGS

Fig. 1 is an external view showing a mobile telephone according to an embodiment of the present invention.
Fig. 2 is a block diagram showing the structure of the mobile telephone shown in Fig. 1.
Fig. 3 is a flow chart describing a display control method of the mobile telephone shown in Fig. 1 and Fig. 2.
Fig. 4 is a schematic diagram showing a telephone call state of the mobile telephone shown in Fig. 1.
Fig. 5 is a schematic diagram showing an example of a screen of a display section of the mobile telephone shown in Fig. 1: (a) is a part of the schematic diagram showing the state in which software keys appear; (b) is a part of the schematic diagram showing that the software keys disappear.
Fig. 6 is a schematic diagram showing an operation state of an ordinary mobile telephone.

### BEST MODES THAT CARRY OUT THE INVENTION

Next, with reference to the accompanying drawings, an embodiment of the present invention will be described.

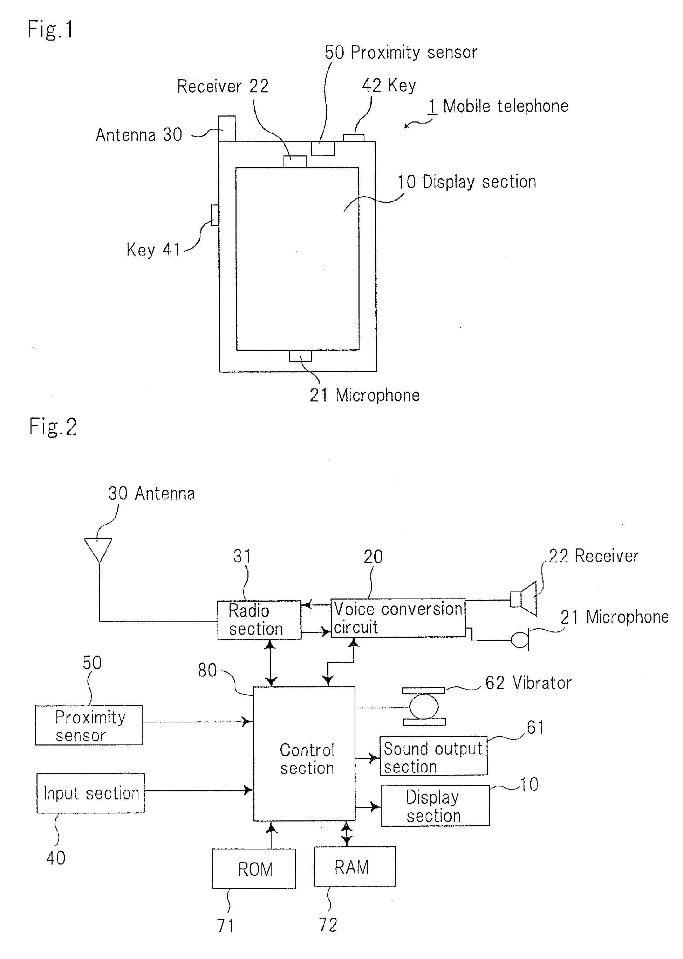

Fig. 1 is an external view showing a mobile telephone according to an embodiment of the present invention. Fig. 2 is a block diagram showing the structure of mobile telephone 1 shown in Fig. 1.

As shown in Fig. 1 and Fig. 2, mobile telephone 1 according to this embodiment is composed of antenna 30 and radio section 31 that operate as a communication function; receiver 22 that outputs voice information; microphone 21that inputs voice information; voice conversion circuit 20 that converts information received through antenna 30 and radio section 31 into voice, outputs the voice to receiver 22, converts voice that is input through microphone 21 into data that are transmitted through antenna 30 and radio section 31; display section 10 that is composed of a display unit that displays information; input section 40 that is composed of keys 41 and 42 that are operated from the outside so as to input information; sound output section 61 that is composed of a buzzer or the like and that outputs a ringing tone and so forth; vibrator 62 that vibrates so as to notify the user of an incoming call; proximity sensor 50 that is located opposite to the user when he or she makes a call and that detects whether or not the body of the user is in close proximity to the proximity sensor; control section 80 that controls the constituent members of mobile telephone 1; ROM 71 that stores programs and data that control section 80 uses; and RAM 72 that stores data that control section 80 processes. Note that input section 40 is not limited to keys 41 and 42 that can be operated from the outside, but software keys as operation means that appears on display section 10. ROM 71 stores image data of the software keys.

Next, the display control method of mobile telephone 1 having the foregoing structure will be described.

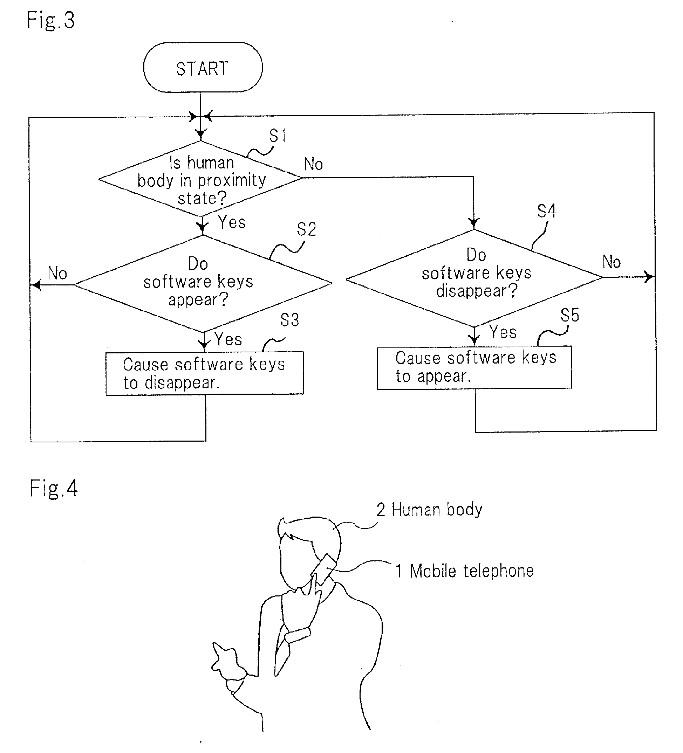

Fig. 3 is a flow chart describing the display control method of mobile telephone 1 shown in Fig. 1 and Fig. 2.

In mobile telephone 1 shown in Fig. 1, proximity sensor 50 detects whether or not a human body is in close proximity to the proximity sensor (at step 1).

Fig. 4 is a schematic diagram showing a telephone call state of mobile telephone 1 shown in Fig. 1.

If mobile telephone 1 shown in Fig. 1 operates in the telephone call state, human body 2 is in proximity to proximity sensor 50 as shown in Fig. 4.

If software keys appears on display section 10 (at step 2), they are caused to disappear (at step 3).

Fig. 5 is a schematic diagram showing an example of a screen of display section 10 of mobile telephone 1 shown in Fig. 1: (a) is a part of the schematic diagram showing that software keys appear; (b) is a part of the schematic diagram showing that software keys disappear.

Software keys 11 that appear on display section 10 of mobile telephone 1 serve to designate operations of mobile telephone 1. Software keys 11 are caused to appear on display section 10 as shown in Fig. 5(a) under the control of control section 80. If a software key is touched, mobile telephone 1 performs an operation corresponding to the touched software key under the control of control section 80. For example, if a telephone call button of the software keys that appear on display section 10 is touched, mobile telephone 1 originates a call. If a volume button of the software keys is touched, mobile telephone 1 changes the volume level.

If proximity sensor 50 detects that the human body is in close proximity to the proximity sensor while software keys appear on display section 10, control section 80 causes only the software keys to disappear while the information screen appears on display section 10 as shown in Fig. 5(b). Thus, control section 80 cannot accept data through the software keys.

If proximity sensor 50 does not detect that the human body is in close proximity to proximity sensor 50 while the software keys disappear on display section 10 (at step 4), control section 80 causes the software keys to appear (at step 5).

Thus, according to this embodiment, if the human body is in close proximity to proximity sensor 50, only the software keys are caused to disappear while the information screen appears on display section 10. Thus, mobile telephone 1 does not switch from the information screen that appears on the display to the other screen. In addition, if the user unintentionally touches display section 10, mobile telephone 1 can be prevented from performing an operation corresponding to the touched position of display section 10. Moreover, the user can recognize that mobile telephone 1 does not accept data through the software keys that appear on display section 10.

According to the present invention, although the processes performed in mobile telephone 1 are accomplished by the foregoing dedicated hardware, they may be executed by a program that accomplishes the processes in such a manner that the program is recorded on a recording medium from which mobile telephone 1 can read, mobile telephone 1 reads the program from the recording medium, and executes the program. The recoding medium from which mobile telephone 1 can read the program may be a movable recording medium such as an IC card, a memory card, a floppy disk (registered trademark), a magneto-optical disc, a DVD, or a CD or a HDD built in mobile telephone 1. The program recorded on the recording medium is read by, for example, a control section such that the foregoing processes are performed under the control of the control section.

The present application claim a priority based on Japanese Patent Application JP 2010-248795 filed on November 5, 2010, the entire contents of which are incorporated herein by reference in its entirety.

## Claims

1. A mobile telephone that has a display section on which information and operation means appear and that performs an operation as said operation means is touched, comprising:
control means that causes said operation means to appear on said display section and controls an operation of said mobile telephone as said operation means is touched; and
a proximity sensor that detects whether or not a human body is in close proximity to said proximity sensor,
wherein if said proximity sensor detects that said human body is in close proximity to said proximity sensor while said operation means appears on said display section, said control means causes said operation means to disappear on said display section.

2. The mobile telephone as set forth in claim 1,
wherein if said proximity sensor does not detect that the human body is in close proximity to said proximity sensor while said operation means disappears on said display section, said control means causes said operation means to appear on said display section.

3. The mobile telephone as set forth in claim 1,
wherein said proximity sensor is located opposite to said human body when a telephone call is made on said mobile telephone.

4. A display control method of a mobile telephone that has a display section on which information and operation means appear and that performs an operation as said operation means is touched, comprising:
causing said operation means to disappear on said display section if a human body is in close proximity to a predetermined region of said display section while said operation means appears on said display section.

5. The display control method of the mobile telephone as set forth in claim 4, further comprising:
causing said operation means to appear on said display section if said human body is not in close proximity to said predetermined region while said operation means disappears on said display section.

6. The display control method of the mobile telephone as set forth in claim 4, further comprising:
causing said operation means to disappear on said display section if the human body is in close proximity to a surface opposite to said human body and a telephone call is made while said operation means appears on said display section.
